# EUROPÄISCHE PATENTSCHRIFT

(11) **EP 3 380 382 B1**
(45) Veröffentlichungstag und Bekanntmachung des Hinweises auf die Patenterteilung: **25.03.2020**
(21) Anmeldenummer: 16823012.6
(22) Anmeldetag: 29.12.2016
(51) Int. Cl.: B61D 19/02

(54) **FRONTNOTAUSSTIEG**
FRONT EMERGENCY EXIT
SORTIE DE SECOURS FRONTALE

(30) Priorität: 28.01.2016 DE 102016201275
(43) Veröffentlichungstag der Anmeldung: 03.10.2018
(73) Patentinhaber: Siemens Mobility GmbH, 81739 München (DE)
(72) Erfinder: SCHMIDT, Gerhard, 45127 Essen (DE)
(86) Internationale Anmeldenummer: PCT/EP2016/082819
(87) Internationale Veröffentlichungsnummer: WO 2017/129343

(56) Entgegenhaltungen:
- EP-A2- 0 259 886
- WO-A1-2013/026821
- DE-U1- 9 103 785
- US-A1- 2010 257 787

## Beschreibung

Die Erfindung betrifft eine Türvorrichtung für ein Fahrzeug, mit einer Türklappe die um eine erste Achse drehbar gelagert ist und ein Fahrzeug mit wenigstens einer Türvorrichtung.

Fahrzeuge, beispielsweise Schienenfahrzeuge verkehren zum Teil in solch engen Tunneln, dass die seitlichen Türen für eine Evakuierung im Störungsfall blockiert sind. Es können zusätzlich Notausstiege an den Stirnseiten der Wagen erforderlich sein. Zum Erreichen des Gleisniveaus werden zusätzlich meist Leitern oder Treppen benötigt.

Eine besondere Herausforderung ist dabei eine weit vor der Fahrzeugfront vorstehende automatische Kupplung, die für die Ausstiegsvorrichtung zusätzlich die Überbrückung der horizontalen Distanz erforderlich macht.

Da sich der Notausstieg an der vom Fahrwind belasteten Front des Führerraums befindet, bestehen hohe Anforderungen an die Dichtigkeit des Systems.

Bei kleineren Flugzeugen sind Ausstiegssysteme mit in einer Klappe integrierten oder daran direkt angebauten Treppenstufen als reguläre Passagiertüren bekannt geworden (siehe z.B. https://web.archive.org/web/20150914110404/http://napoleon130 .tripod.com/id705.html). Dabei führen die Klappen eine Drehbewegung um eine horizontale, nahe der Fahrzeugaußenhaut gelegene Achse aus. Ein anderes Beispiel für eine Türklappe bei einem Flugzeug ist in der US-A-3,213,962 beschrieben.

Eine Anwendung für Schienenfahrzeuge wird begrenzt durch die Kollision der in der geöffneten Stellung schräg nach unten abfallenden Klappe mit der vor der Fahrzeugfront vorstehenden automatischen Kupplung.

Schienenfahrzeuge mit gattungsgemäßen Türklappen an der Fahrzeugfront sind aus den Dokumenten EP 0 259 886 A2, DE 91 03 785 U1 und US 2010/257787 A1 bekannt.

Der Erfindung liegt die Aufgabe zugrunde, eine einfach zu bedienende Notausstiegstür vorzuschlagen.

Gelöst wird die Aufgabe durch den Gegenstand des unabhängigen Patentanspruchs 1. Weiterbildungen und Ausgestaltungen der Erfindung finden sich in den Merkmalen der abhängigen Patentansprüche wieder.

Eine erfindungsgemäße Türvorrichtung ist geeignet für ein Fahrzeug und umfasst eine Türklappe die um eine erste Achse drehbar gelagert ist. Darüber hinaus weist die erfindungsgemäße Türvorrichtung eine Kinematik auf, welche ausgebildet ist, die erste Achse bei einer Drehbewegung der Türklappe um die Achse transversal zu bewegen.

Bei der Kinematik, allgemein auch als Getriebe bezeichnet, handelt es sich insbesondere um ein Gelenkgetriebe.

Die Kinematik ist weitergebildet als Koppelgetriebe ausgebildet, so dass die Drehbewegung zwangsläufig zu einer transversalen Bewegung der Türklappe führt und/oder umgekehrt. Ist die Transversalbewegung durch die Drehbewegung bedingt, handelt es sich somit um eine Zwangsbewegung in Transversalrichtung. Die Kinematik ist dazu insbesondere an einem feststehenden Türrahmen befestigt. Somit ist die Türklappe über die Kinematik, also das Getriebe, so an dem Türrahmen befestigt.

Eine Bewegung transversal zu einer Achse ist eine Bewegung in einer Transversal- oder Axialebene, d.h. in einer Ebene senkrecht zur Achse. In einer Ausführungsform der Erfindung ist die Kinematik derart ausgebildet, dass die erste Achse bei einer Drehbewegung der Türklappe um die Achse senkrecht zur ersten Achse bewegt wird. Eine geradlinige transversale Bewegung liegt in besagter Transversalebene und schneidet die Achse selbst senkrecht. Die transversale Bewegung der Achse ist zwar so ausgebildet, dass die erste Achse aus einer ersten Ruheposition im geschlossenen Zustand der Türklappe heraus in eine zweite Ruheposition im vollständig geöffneten Zustand der Türklappe senkrecht versetzt angeordnet ist, jedoch muss sie dazu nicht zwangsläufig auf einer geradlinigen Bahn, insbesondere radial zur Achse, geführt werden, sondern kann beispielsweise durch die Kinematik auch auf eine Kreisbahn oder andere Bahn gezwungen werden.

Die Drehbewegung der Türklappe um die erste Achse wird beim Öffnen und/oder Schließen der Türklappe ausgeführt.

Die Türvorrichtung ist geeignet ausgebildet, mit einem Chassis oder einem Wagenkasten eines Fahrzeugs, insbesondere einem Türrahmen, verbunden zu werden.

Im montierten Zustand ist die erste Achse insbesondere horizontal angeordnet, so dass die Türklappe hoch- und herunterklappbar ist. In einem eingeklappten, also im geschlossenen Zustand verschließt die Türklappe einen Durchgang, insbesondere einen Türrahmen. In einem ausgeklappten, also geöffneten Zustand gibt sie diesen Durchgang frei. Im ausgeklappten Zustand ist die Türklappe nach unten abgesenkt, so dass die Tür in einem heruntergeklappten, also vollständig geöffneten Zustand größtenteils unterhalb der ersten Achse angeordnet ist. Im hochgeklappten, also geschlossenen Zustand dagegen kann die Türklappe größtenteils über der ersten Achse angeordnet ist.

Weitergebildet führt die transversale Bewegung der ersten Achse dazu, dass sie einen Abstand größer Null zwischen der ersten Ruheposition im geschlossenen Zustand der Türklappe und der zweiten Ruheposition im vollständig geöffneten Zustand der Türklappe aufweist. Insbesondere ist der Abstand zwischen den beiden Ruhepositionen in horizontaler Richtung größer Null.

Gemäß der Erfindung ist die Türklappe über wenigstens einen ersten Gelenkarm mit einem Türrahmen verbunden, welcher erste Gelenkarm beweglich zum Türrahmen am Türrahmen gelagert ist, wobei die erste Achse am ersten Gelenkarm gelagert ist.

Der erste Gelenkarm ist Teil der Kinematik und umfasst eine Aufnahme für die erste Achse. Er nimmt die erste Achse auf und er ist dreh-, und/oder schwenkbeweglich oder verschiebbar am ersten Türrahmen gelagert, so dass er rotatorisch und/oder translatorisch zu diesem bewegbar ist. Beispielsweise ist eine translatorische Bewegung des ersten Gelenkarms relativ zum Türrahmen mit der rotatorischen Bewegung der Türklappe um die erste Achse gekoppelt. Eine translatorische Beweglichkeit wird beispielsweise durch eine Linearführung des ersten Gelenkarms zum Türrahmen erreicht.

Fürderhin weist die Kinematik der Türvorrichtung einen zweiten Gelenkarm auf, welcher drehbar um eine parallel zur ersten Achse verlaufende zweite Achse am Türrahmen und drehbar um eine parallel zur ersten Achse verlaufende dritte Achse am ersten Gelenkarm gelagert ist.

Somit ist der erste Gelenkarm über eine dritte Achse um diese drehbeweglich mit dem zweiten Gelenkarm verbunden. Die Achsen sind insbesondere parallel zueinander angeordnet, so dass sich ein Schubkurbelgetriebe ergibt, über welche die Türklappe am Türrahmen gehalten ist, mit dem ersten und dem zweiten Gelenkarm als Getriebeglieder der Schubkurbel.

Weitergebildet ist der erste Gelenkarm drehbar um eine parallel zur ersten Achse verlaufende vierte Achse am Türrahmen gelagert. Insbesondere ist der erste Gelenkarm teleskopierbar ausgebildet. Er könnte auch als teleskopierbare Pendelstütze bezeichnet werden.

Weitergebildet ist die dritte Achse zwischen der ersten und der vierten Achse angeordnet ist und der erste Gelenkarm ist zwischen der dritten und der vierten Achse teleskopierbar ausgebildet.

In einer Ausführungsform sind Anschläge zur Begrenzung der Teleskopbewegung vorgesehen. Diese sind von der Kinematik mit umfasst und können beispielsweise vom ersten Gelenkarm mit umfasst sein.

Weitergebildet ist der erste Gelenkarm zwischen der ersten und der dritten Achse fest ausgebildet, insbesondere ist auch der zweite Gelenkarm zwischen der zweiten und der dritten Achse fest ausgebildet.

Die erste Achse ist insbesondere im Bereich eines Endes der Türklappe in ihrer Längsrichtung angeordnet, welches im montierten Zustand insbesondere das untere Ende der Türklappe darstellt. Die erste Achse ist weitergebildet im Bereich eines ersten Endes des zweiten Gelenkarms angeordnet. Die vierte Achse ist insbesondere im Bereich eines des ersten Endes gegenüberliegenden zweiten Endes des zweiten Gelenkarms angeordnet. Die zweite Achse ist insbesondere im Bereich eines ersten Endes des zweiten Gelenkarms angeordnet.

Gemäß einer weiteren Weiterbildung ist am zweiten Gelenkarm und an der Türklappe ein zumindest zur Übertragung von Zugkräften zwischen dem zweiten Gelenkarm und der Türklappe geeignetes Koppelelement angeordnet.

Das Koppelelement, beispielsweise ein biegeschlaffes Seil, ist sowohl mit dem zweiten Gelenkarm als auch mit der Türklappe verbunden. Dazu weisen der zweite Gelenkarm sowie die Türklappe entsprechende Anlenkpunkte auf. Insbesondere ist das Koppelelement als steife Pendelstütze, die ebenso auf Druck belastbar ist, als Teil der Kinematik jeweils drehbar am zweiten Gelenkarm und an der Türklappe befestigt. Sie ist insbesondere drehbar um eine parallel zur ersten Achse verlaufende fünfte Achse am zweiten Gelenkarm und drehbar um eine parallel zur ersten Achse verlaufende sechste Achse an der Türklappe gelagert.

Die Aufnahme für das Koppelelement bzw. die sechste Achse ist weitergebildet zwischen der ersten Achse und einem freien Ende der Türklappe angeordnet.

Handelt es sich beim Koppelement um eine auf Druck belastbare Pendelstütze, wird beim Einklappen der Türklappe die transversale der ersten Achse zwangsweise ausgeführt. Es handelt sich um eine Zwangsbewegung. Der erste und zweite Gelenkarm, sowie das Koppelelement sind somit Teil eines Koppelgetriebes.

Gemäß einer Ausführungsform der Erfindung ist die Kinematik als Koppelgetriebe mit zumindest vier Gelenken ausgebildet. Im oben genannten Beispiel mit der Pendelstütze als Koppelelement sind es gar sechs.

Weitergebildet weist der zweite Gelenkarm eine Trittfläche für Passagiere aufweist. Beispielsweise ist er zumindest teilweise als Trittfläche für Passagiere ausgebildet. Er könnte dann insbesondere auch als Brücke bezeichnet werden, wenn die Trittfläche einen Spalt zwischen der Türklappe und einem Fußboden des Fahrzeugs überbrückt.

Gemäß einer weiteren Weiterbildung weist die Türklappe eine Treppe für Passagiere auf. Diese ist insbesondere unmittelbar und fest mit ihr verbunden oder senkrecht zur ersten Achse und parallel zur Türklappe an dieser verschiebbar angeordnet. Die Treppe weist zueinander versetzte Stufen auf. Alternativ weist die Türklappe zueinander abgestufte Tritte einer Leiter auf.

Eine weitere Ausgestaltung der Erfindung sieht vor, dass die Türklappe und/oder der Türrahmen zumindest eine gegeneinander wirksame Dichtfläche umfasst, welche im geschlossenen Zustand der Türvorrichtung die Türklappe zum Türrahmen hin abdichtet. Diese ist insbesondere um die Türfläche der Türklappe und/oder um den Türrahmen umlaufend angeordnet.

Ein erfindungsgemäßes Fahrzeug, insbesondere ein spurgebundenes Fahrzeug, beispielsweise ein Schienenfahrzeug des Personenverkehrs, umfasst wenigstens eine erfindungsgemäße Türvorrichtung. Insbesondere ist diese als frontseitige Notausstiegstür vorgesehen.

Gemäß einer Weiterbildung des Fahrzeugs weist dieses wenigstens eine Frontkupplung auf, wobei die Türklappe in einer gemeinsamen Mittenebene des Fahrzeugs mit der Frontkupplung angeordnet ist.

Die Türvorrichtung ist weitergebildet so am Fahrzeug angeordnet, dass die erste Achse horizontal verläuft. Insbesondere steht die erste Achse senkrecht auf eine Längsmittenebene des Fahrzeugs und somit parallel zu einer Fahrzeugquerachse und senkrecht zur Fahrzeuglängsachse.

Die Türklappe ist an der ersten Achse mittelbar über die Kinematik am Fahrzeug, insbesondere an einem mit dem Fahrzeug fest verbundenen Türrahmen gehalten.

Eine weitere Weiterbildung der Erfindung ist dadurch gekennzeichnet, dass die Kinematik derart ausgebildet ist, dass die erste Achse in einem geschlossenen Zustand der Türklappe innerhalb der Außenhaut eines Wagenkastens des Fahrzeug liegt und in einem geöffneten Zustand der Türklappe außerhalb der Außenhaut eines Wagenkastens des Fahrzeug liegt.

Weitergebildet kann die erste Achse im geöffneten Zustand der Türklappe auch über eine Stirnseite des Fahrzeugs, welche beispielsweise durch die Frontkupplung gebildet wird, hinaus stehen. Sie überragt somit auch die Frontkupplung. Die Schließbewegung der Türklappe führt dazu, dass die erste Achse aus der Stellung jenseits der Frontkupplung wieder transversal in das Fahrzeug hinein bewegt wird. Die Außenhaut des Wagenkastens des Fahrzeugs begrenzt diesen zur Umwelt hin und bildet somit die Fahrzeugkontur.

Ein Vorteil der Erfindung ist darin zu sehen, dass die Türvorrichtung auch leicht durch nicht geschulte Personen bedienbar ist. Wie bereits ausgeführt, trennen die aus dem Stand der Technik bekannten Lösungen die Öffnung der Front in Form einer Tür und die Überbrückung der Längen- und Höhendifferenz mit anlegbaren oder ausklappbaren Stegen, Treppen oder Leitern. Die damit verbundene mehrschrittige Bedienung ist aber nicht geeignet für die Anwendung durch ungeschulte Personen, insbesondere Fahrgäste.

Der Erfindung liegt die Abkehr von einer einzigen reellen Drehachse für die Türklappe zugrunde. Mit der Kinematik ist es möglich, die Endposition der Türklappe so zu konstruieren, dass sie nicht mit der Frontkupplung des Fahrzeugs kollidiert und die integrierten Treppenstufen die optimale Lage und Neigung haben.

Mit der Kopplung der Drehbewegung mit der Verlagerung der Drehachse über die Gelenkarme und die Pendelstützen ergibt sich eine einzige kontinuierliche Bewegung, die eine einfache Bedienung ohne Koordinationsbedarf ermöglicht.

Der Verschluss der Fahrzeugfront mit der einteiligen Türklappe erlaubt eine effektive Ausbildung der umlaufenden Dichtung.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.
- Fig. 1: zeigt ein Ausgestaltungsbeispiel einer erfindungsgemäßen Türvorrichtung in eingebautem, geschlossenem Zustand in einer Teilschnittdarstellung von der Seite,
- Fig. 2: zeigt das Ausgestaltungsbeispiel der Fig. 1 in perspektivischer Ansicht,

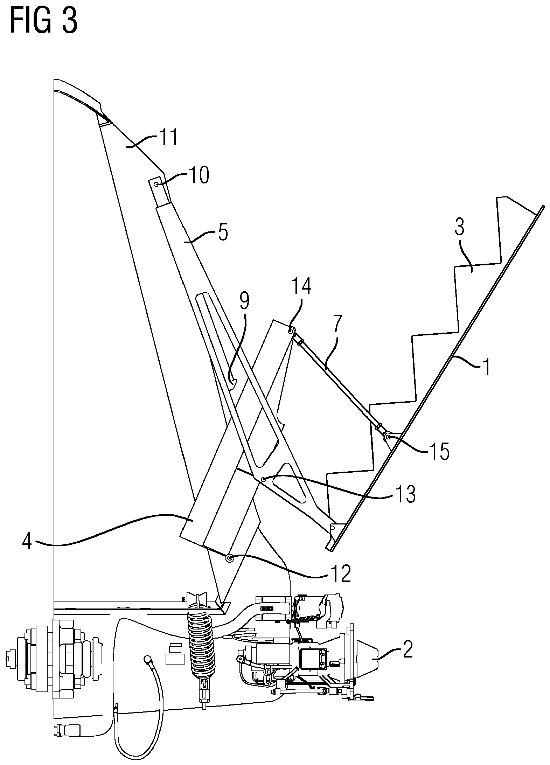

- Fig. 3: zeigt das Ausgestaltungsbeispiel der Fig. 1 in halb geöffnetem Zustand in Seitenansicht,

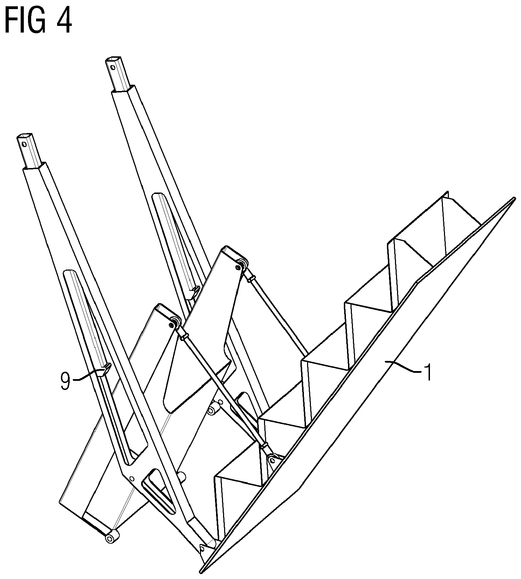

- Fig. 4: zeigt das Ausgestaltungsbeispiel der Fig. 3 in perspektivischer Ansicht,
- Fig. 5: zeigt das Ausgestaltungsbeispiel der Fig. 1 in vollständig geöffnetem Zustand in Seitenansicht,
- Fig. 6: zeigt das Ausgestaltungsbeispiel der Fig. 5 in perspektivischer Ansicht.

In den Figuren ist eine erfindungsgemäße Türvorrichtung dargestellt. Sie umfasst eine Türklappe 1 und eine Kinematik über welche die Türklappe 1 an einem Türrahmen 11 befestigt ist. Der Türrahmen 11 ist Teil eines Fahrzeugs und relativ zu diesem stationär. Die Kinematik ist hier als Koppelgetriebe ausgebildet. Dieses umfasst mindestens vier Gelenke. Hier umfasst die Kinematik bzw. das Koppelgetriebe:
- einen ersten Gelenkarm 5;
- einen zweiten Gelenkarm 4;
- eine Pendelstütze 7.

Die Türklappe 1 ist um eine erste Achse 8 klappbar, welche hier waagerecht verläuft.

Das Problem, dass die Türklappe 1 bei einer Drehbewegung um eine innerhalb der Fahrzeugkontur angeordneten reelle erste Achse 8 in der geöffneten Stellung so weit hinten zu liegen kommt, dass sie mit einer Frontkupplung 2 des Fahrzeugs kollidiert, ist dadurch gelöst, dass die an der Türklappe 1 angeordnete erste Achse 8 über zusätzliche Elemente (erster Gelenkarm 5, zweiter Gelenkarm 4, Pendelstütze 7) beim Öffnen weiter nach vorne verlagert wird. Die Verlagerung der ersten Achse 8 zur Fahrzeugfront erfolgt über diese untereinander gelenkig verbundenen Elemente.

Der an der Fahrzeugfront angelenkte zweite Gelenkarm 4 kann mit einer begehbaren Oberfläche als Brücke zur Schließung der horizontalen Distanz zur Treppe 3 auf der Türklappe 1 ausgestattet werden.

Der andere Gelenkarm 5 kann am oberen Ende im Wesentlichen vertikal und in Fahrzeuglängsrichtung pendelnd beweglich geführt werden. Er ist über eine vierte Achse 10 mit dem Türrahmen 11 verbunden. Er ist als teleskopierbare Pendelstütze ausgebildet.

Die im Wesentlichen vertikale Führung des Gelenkarms 5 kann als Linearführung ausgebildet sein.

Die Linearführung kann mit Anschlägen 9 zur Begrenzung der Bewegung in der geöffneten Stellung ausgestattet sein.

Die Linearführung kann als aus dem Gelenkarm 5 ausziehbarer Balken 6 ausgeführt sein, der an seinem Ende gelenkig an der Fahrzeugfront 11 befestigt ist.

Die Drehbewegung der Türklappe 1 kann über Pendelstützen 7, auch Lenker genannt, zwischen Türklappe und dem Gelenkarm 4 so mit der Verlagerung der ersten Achse 8 gekoppelt werden, dass sich eine einzige kontinuierliche Bewegung der gesamten Systems ergibt.

Hier ist die Türklappe 1 über die Kinematik, also das Getriebe mit den Gelenkarmen 4, 5 und der Pendelstütze 7, so an dem Türrahmen 11 befestigt, dass bei einer Drehbewegung der Türklappe 1 um die erste Achse 8 die erste Achse 8 zwangsläufig transversal, hier vom Fahrzeug weg, bewegt wird.

Der zweite, als Brücke ausgebildete Gelenkarm 4 ist drehbar um eine parallel zur ersten Achse 8 verlaufende zweite Achse 12 am Türrahmen 11 und drehbar um eine parallel zur ersten Achse 8 verlaufende dritte Achse 13 am ersten Gelenkarm gelagert, wobei die Achsen 8, 12 und 13 nicht zusammenfallen - ihr gegenseitiger Abstand ist jeweils größer Null. Hier sind die erste und die vierte Achse 8, 10 in gegenüberliegenden Bereichen des ersten Gelenkarms 5 angeordnet.

Die dritte Achse 13 ist zwischen der ersten und der vierten Achse 8, 10 angeordnet, so dass der erste Gelenkarm 5 zwischen der dritten und der vierten Achse 8, 10 teleskopierbar und zwischen der dritten und der ersten Achse 13, 8 fest ausgebildet ist. Seine Länge ist somit zwischen der dritten und der vierten Achse 8, 10 veränderlich und zwischen der dritten und der ersten Achse 13, 8 unveränderlich.

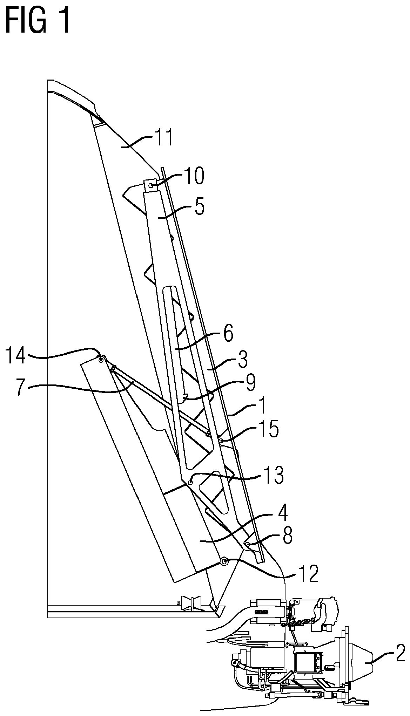

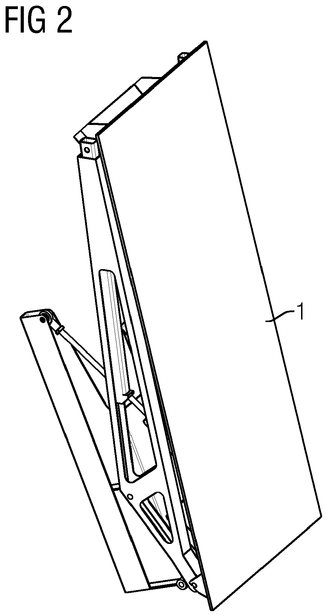

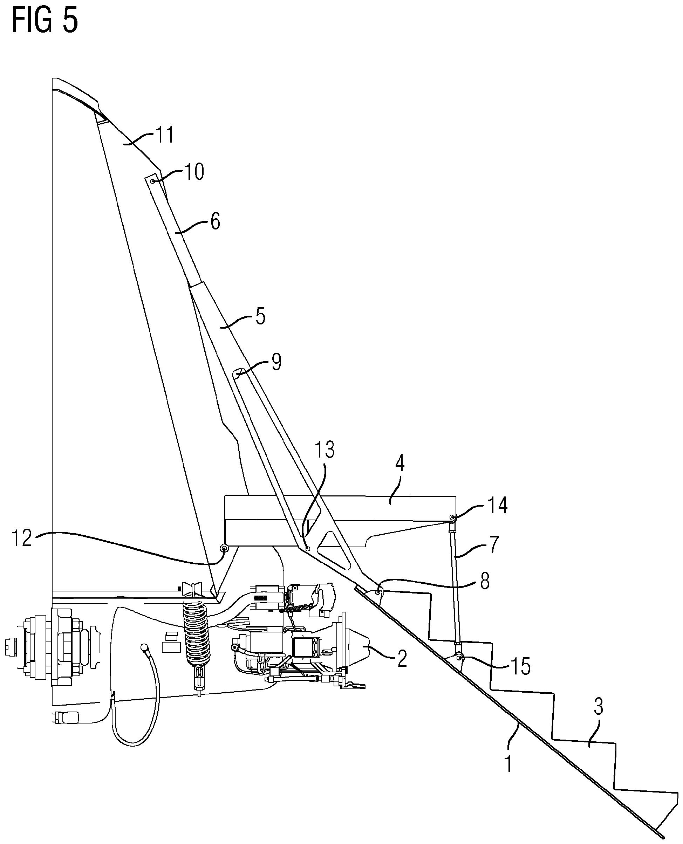

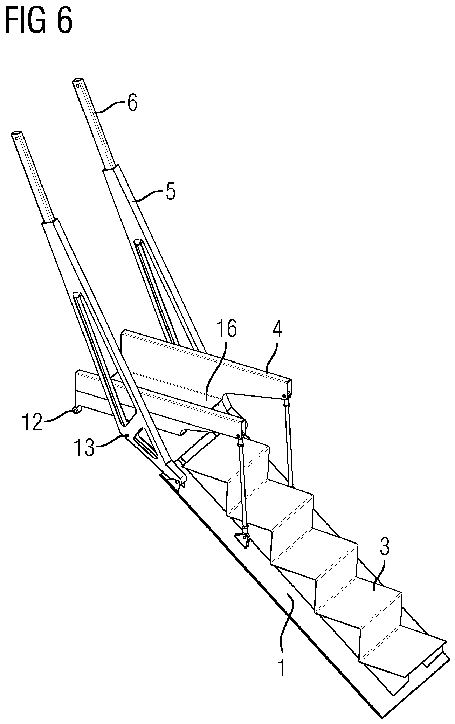

Wird nun die Türklappe 1 aus der geschlossenen Stellung, wie in Fig. 1 und 2 skizziert nach unten geklappt, beispielsweise indem aus dem Fahrzeuginnern eine Kraft auf den oberen Bereich der Türklappe 1 ausgeübt wird, so führt dies zu einer Drehbewegung der Türklappe 1 um die im unteren Bereich der Türklappe 1 gehaltenen ersten Achse 8. Durch die Ausbildung der Kinematik als Koppelgetriebe führt dies zu einer translatorischen Zwangsbewegung der ersten Achse vom Fahrzeug weg. Durch die Drehbewegung der Türklappe 1 um die erste Achse 8 wird die Pendelstütze 7, die zwischen der ersten Achse 8 und dem freien, nach unten zu klappenden Ende der Türklappe 1 mit ausreichenden Abständen zu den genannten Elementen über die sechste Achse 15 gehalten ist, auf Zug belastet. Dadurch wird auf das vordere Ende des als Brücke mit einer Trittfläche 16 ausgebildeten zweiten Gelenkarms 4, an welchem die Pendelstütze 7 über die fünfte Achse 14 angelenkt ist, in eine Bewegung um die zweite Achse 12 gezwungen, wobei gleichzeitig eine Bewegung des ersten Gelenkarms 5 um die vierte Achse 10 ausgelöst wird. Diese wird aber nur dadurch ermöglicht, dass der erste Gelenkarm 5 teleskopierbar ist. Die Längung des ersten Gelenkarms 5 wird durch einen Anschlag 9 begrenzt. Im vollständig ausgeklappten Zustand gemäß Fig. 5 und 6 ist der Anschlag 9 wirksam.

Die mit der Türklappe verbundene Treppe 3 ermöglicht es Passagieren, das Fahrzeug durch die Türvorrichtung zu verlassen.

Der Einklappvorgang ist ausgehend von den Fig. 5 und 6 analog ausführbar. Durch eine vertikal nach oben eingeleitete Kraft auf das freie Ende der Türklappe 1, die diese auf eine Drehbewegung um die erste Achse zwingt, wird die Pendelstütze 7 auf Druck belastet und der zweite Gelenkarm 4 zu einer Drehbewegung um die zweite Achse 12 und der erste Gelenkarm 5 zu einer Drehbewegung um die erste Achse 10 gezwungen. Die Drehbewegungen und die Teleskopbewegung des ersten Gelenkarms 5 sind jeweils gegensätzlich zum Ausklappvorgang.

## Patentansprüche

1. Türvorrichtung für ein Fahrzeug, mit einer Türklappe (1) die um eine erste Achse (8) drehbar gelagert ist, wobei die Türvorrichtung eine Kinematik umfasst, welche ausgebildet ist, die erste Achse (8) bei einer Drehbewegung der Türklappe (1) um die Achse (8) transversal zu bewegen, wobei die Türklappe (1) über wenigstens einen ersten Gelenkarm (5) mit einem Türrahmen (11) verbunden ist, welcher erste Gelenkarm (5) beweglich zum Türrahmen (11) am Türrahmen (11) gelagert ist, wobei die erste Achse (8) am ersten Gelenkarm (5) gelagert ist, **dadurch gekennzeichnet, dass** sie einen zweiten Gelenkarm (4) aufweist, welcher drehbar um eine parallel zur ersten Achse (8) verlaufende zweite Achse (12) am Türrahmen (11) und drehbar um eine parallel zur ersten Achse (8) verlaufende dritte Achse (13) am ersten Gelenkarm (5) gelagert ist.

2. Türvorrichtung nach Anspruch 1, **dadurch gekennzeichnet, dass** der erste Gelenkarm (5) drehbar um eine parallel zur ersten Achse (8) verlaufende vierte Achse (10) am Türrahmen (11) gelagert ist.

3. Türvorrichtung nach Anspruch 1 oder 2, **dadurch gekennzeichnet, dass** die dritte Achse (13) zwischen der ersten und der vierten Achse (8, 10) angeordnet ist, und dass der erste Gelenkarm (5) zwischen der dritten und der vierten Achse (13, 10) teleskopierbar ausgebildet ist.

4. Türvorrichtung nach Anspruch 3, **dadurch gekennzeichnet, dass** am zweiten Gelenkarm (4) und an der Türklappe (1) ein zumindest zur Übertragung von Zugkräften zwischen dem zweiten Gelenkarm (4) und der Türklappe (1) geeignetes Koppelelement angeordnet ist.

5. Türvorrichtung nach Anspruch 4, **dadurch gekennzeichnet, dass** das Koppelelement als auch auf Druck belastbare Pendelstütze (7) ausgebildet ist, welche drehbar um eine parallel zur ersten Achse (8) verlaufende fünfte Achse (14) am zweiten Gelenkarm (4) und drehbar um eine parallel zur ersten Achse (8) verlaufende sechste Achse (15) an der Türklappe (1) gelagert ist.

6. Türvorrichtung nach einem der Ansprüche 1 bis 4, **dadurch gekennzeichnet, dass** die Kinematik als Koppelgetriebe ausgebildet ist.

7. Türvorrichtung nach einem der Ansprüche 1 bis 6, **dadurch gekennzeichnet, dass** der zweite Gelenkarm (4) eine Trittfläche (16) für Passagiere aufweist.

8. Türvorrichtung nach einem der Ansprüche 1 bis 7, **dadurch gekennzeichnet, dass** die Türklappe (1) eine Treppe (3) für Passagiere aufweist.

9. Türvorrichtung nach einem der Ansprüche 1 bis 8, **dadurch gekennzeichnet, dass** die Türklappe (1) und/oder der Türrahmen (11) zumindest eine gegeneinander wirksame Dichtfläche umfasst, welche im geschlossenen Zustand der Türvorrichtung die Türklappe (1) zum Türrahmen (11) hin abdichtet.

10. Spurgebundenes Fahrzeug mit einer Türvorrichtung nach einem der Ansprüche 1 bis 9.

11. Fahrzeug nach Anspruch 10, **dadurch gekennzeichnet, dass** die erste Achse (8) horizontal angeordnet ist.

12. Fahrzeug nach einem der Ansprüche 10 oder 11, **dadurch gekennzeichnet, dass** es eine Frontkupplung (2) aufweist, wobei die Türklappe (1) in einer gemeinsamen Mittenebene des Fahrzeugs mit der Frontkupplung angeordnet ist.

13. Fahrzeug nach Anspruch 12, **dadurch gekennzeichnet, dass** die Kinematik derart ausgebildet ist, dass die erste Achse (8) in einem geschlossenen Zustand der Türklappe (1) innerhalb der Außenhaut eines Wagenkastens des Fahrzeug liegt und in einem geöffneten Zustand der Türklappe (1) außerhalb der Außenhaut eines Wagenkastens des Fahrzeug liegt.

## Claims

1. Door device for a vehicle, with a door flap (1) which is mounted rotatably about a first axis (8), wherein the door device comprises kinematics designed to move the first axis (8) transversely during a rotational movement of the door flap (1) about the axis (8), wherein the door flap (1) is connected to a door frame (11) via at least one first articulated arm (5), which first articulated arm (5) is mounted on the door frame (11) so as to be movable with respect to the door frame (11), wherein the first axis (8) is mounted on the first articulated arm (5), **characterized in that** said door device has a second articulated arm (4) which is mounted on the door frame (11) so as to be rotatable about a second axis (12) running parallel to the first axis (8) and on the first articulated arm (5) so as to be rotatable about a third axis (13) running parallel to the first axis (8).

2. Door device according to Claim 1, **characterized in that** the first articulated arm (5) is mounted on the door frame (11) so as to be rotatable about a fourth axis (10) running parallel to the first axis (8).

3. Door device according to Claim 1 or 2, **characterized in that** the third axis (13) is arranged between the first and the fourth axes (8, 10), and **in that** the first articulated arm (5) is formed telescopically between the third and the fourth axes (13, 10).

4. Door device according to Claim 3, **characterized in that** a coupling element suitable at least for transmitting tensile forces between the second articulated arm (4) and the door flap (1) is arranged on the second articulated arm (4) and on the door flap (1).

5. Door device according to Claim 4, **characterized in that** the coupling element is in the form of a hinged support (7) which can also be loaded in compression and which is mounted on the second articulated arm (4) so as to be rotatable about a fifth axis (14) running parallel to the first axis (8) and on the door flap (1) so as to be rotatable about a sixth axis (15) running parallel to the first axis (8).

6. Door device according to one of Claims 1 to 4, **characterized in that** the kinematics are in the form of a coupler mechanism.

7. Door device according to one of Claims 1 to 6, **characterized in that** the second articulated arm (4) has a step surface (16) for passengers.

8. Door device according to one of Claims 1 to 7, **characterized in that** the door flap (1) has a flight of steps (3) for passengers.

9. Door device according to one of Claims 1 to 8, **characterized in that** the door flap (1) and/or the door frame (11) comprise/comprises at least one mutually effective sealing surface which seals the door flap (1) with respect to the door frame (11) in the closed state of the door device.

10. Track-bound vehicle with a door device according to one of Claims 1 to 9.

11. Vehicle according to Claim 10, **characterized in that** the first axis (8) is arranged horizontally.

12. Vehicle according to either of Claims 10 and 11, **characterized in that** the vehicle has a front coupling (2), wherein the door flap (1) is arranged in a common centre plane of the vehicle with the front coupling.

13. Vehicle according to Claim 12, **characterized in that** the kinematics are designed in such a manner that the first axis (8) lies within the outer skin of a carriage body of the vehicle in a closed state of the door flap (1) and lies outside the outer skin of a carriage body of the vehicle in an open state of the door flap (1).

## Revendications

1. Système de porte d'un véhicule, comprenant un vantail (1) de porte monté pivotant autour d'un premier axe (8), le système de porte comprenant une cinématique constituée pour déplacer transversalement le premier axe (8) lors d'un mouvement de pivotement du vantail (1) de porte autour de l'axe (8), le vantail (1) de porte étant relié à un cadre (11) de porte par au moins un premier bras (5) d'articulation, lequel premier bras (5) d'articulation est monté sur le cadre (11) de porte, en étant mobile par rapport au cadre (11) de porte, le premier axe (8) étant monté sur le premier bras (5) d'articulation, **caractérisé en ce qu'**il a un deuxième bras (4) d'articulation, qui est monté sur le cadre (11) de porte, en pivotant autour d'un deuxième axe (12) s'étendant parallèlement au premier axe (8), et sur le premier bras (5) d'articulation, en pivotant autour d'un troisième axe (13) s'étendant parallèlement au premier axe (8).

2. Système de porte suivant la revendication 1, **caractérisé en ce que** le premier bras (5) d'articulation est monté sur le cadre (11) de porte, en pivotant autour d'un quatrième axe (10) s'étendant parallèlement au premier axe (8).

3. Système de porte suivant la revendication 1 ou 2, **caractérisé en ce que** le troisième axe (13) est disposé entre le premier et le quatrième axe (8, 10) et **en ce que** le premier bras (5) d'articulation est constitué de manière télescopique entre le troisième et le quatrième axe (13, 10).

4. Système de porte suivant la revendication 3, **caractérisé en ce que**, sur le deuxième bras (4) d'articulation et sur le vantail (1) de porte, est monté un élément de couplage propre au moins à transmettre des forces de traction entre le deuxième bras (4) d'articulation et le vantail (1) de porte.

5. Système de porte suivant la revendication (4), **caractérisé en ce que** l'élément de couplage est constitué également sous la forme d'appui (7) pendulaire, qui peut être soumis à une pression et qui est monté sur le deuxième bras (4) d'articulation, en pivotant autour d'un cinquième axe (14) s'étendant parallèlement au premier axe (8), et sur le vantail (1) de porte, en pivotant autour d'un sixième axe (15) s'étendant parallèlement au premier axe (8).

6. Système de porte suivant l'une des revendications 1 à 4, **caractérisé en ce que** la cinématique est constituée sous la forme d'un mécanisme articulé.

7. Système de porte suivant l'une des revendications 1 à 6, **caractérisé en ce que** le deuxième bras (4) d'articulation a une surface (16) de passage pour des passagers.

8. Système de porte suivant l'une des revendications 1 à 7, **caractérisé en ce que** le vantail (1) de porte a un escalier (3) pour des passagers.

9. Système de porte suivant l'une des revendications 1 à 8, **caractérisé en ce que** le vantail (1) de porte et/ou le cadre (11) de porte comprennent au moins une surface d'étanchéité efficace l'une envers l'autre, qui, à l'état fermé du système de porte, rend le vantail (1) de porte étanche par rapport au cadre (11) de porte.

10. Véhicule guidé sur rail, ayant un système de porte suivant l'une des revendications 1 à 9.

11. Véhicule suivant la revendication 10, **caractérisé en ce que** le premier axe (8) est horizontal.

12. Véhicule suivant l'une des revendications 10 ou 11, **caractérisé en ce qu'**il a un attelage (2) frontal, le vantail (1) de porte étant dans un plan médian commun du véhicule avec l'attelage frontal.

13. Véhicule suivant la revendication 12, **caractérisé en ce que** la cinématique est constituée de manière à ce que le premier axe (8) se trouve, alors que le vantail (1) de porte est à l'état fermé, à l'intérieur de la peau extérieure d'une caisse du véhicule, et alors que le vantail (1) de porte est à l'état ouvert, à l'extérieur de la peau extérieure d'une caisse du véhicule.
